# FASCICULE DE BREVET EUROPEEN

(11) **EP 1 306 124 B1**
(45) Date de publication et mention de la délivrance du brevet: **29.06.2005**
(21) Numéro de dépôt: 02360292.3
(22) Date de dépôt: 22.10.2002
(51) Int. Cl.: B01F 17/50, C08F 2/26, C08F 20/18, C09J 133/08

(54) **Procédé de polymérisation en émulsion comprenant l'utilisation de sulfonate(s) de lignine comme stabilisateur(s), dispersions obtenues et leurs utilisations**
Emulsionspolymerisationsverfahren enthaltend die Verwendung von Ligninsulfonat(en) als Stabilisator(en), erhaltene Dispersionen und deren Verwendungen
Emulsion polymerization process comprising the use of lignin sulfonate(s) as stabilizer(s), obtained dispersions and their uses

(30) Priorité: 26.10.2001 FR 0113914
(43) Date de publication de la demande: 02.05.2003
(73) Titulaire: Collano SA (Société Anonyme), 67520 Marlenheim (FR)
(72) Inventeur: Arz, Christof, 6207 Nottwil (CH)
(74) Mandataire: Nuss, Pierre

(56) Documents cités:
- EP-A- 0 042 192
- EP-A- 0 780 401
- FR-A- 2 337 735
- FR-A- 2 477 554
- US-A- 2 232 515
- US-A- 2 354 210
- US-A- 4 943 612
- DATABASE WPI Section Ch, Week 199029 Derwent Publications Ltd., London, GB; Class A13, AN 1990-221753 XP002207066 & JP 02 151601 A (DAICEL CHEM IND LTD), 11 juin 1990 (1990-06-11)
- DATABASE WPI Section Ch, Week 198719 Derwent Publications Ltd., London, GB; Class A18, AN 1987-133421 XP002207067 & JP 62 074908 A (JAPAN SYNTHETIC RUBBER CO LTD), 6 avril 1987 (1987-04-06)

## Description

La présente invention concerne le domaine de la synthèse de polymères et plus particulièrement celui de la polymérisation en émulsion.

Elle a pour objet un procédé mettant en oeuvre au moins un sulfonate de lignine à titre de stabilisateur ou d'agent de stabilisation, les dispersions qui peuvent être obtenues par ledit procédé ainsi que les différentes utilisations des dispersions précitées.

La polymérisation en émulsion permet d'obtenir des polymères de masses molaires élevées avec une grande vitesse de polymérisation. Le ou les monomères employés doivent en principe être insolubles (ou très peu solubles) dans l'eau alors que l'amorceur de la réaction de polymérisation doit en principe l'être.

Dans la pratique, la polymérisation en émulsion nécessite souvent l'adjonction à l'émulsion réactionnelle de substances stabilisantes.

Or, les émulsifiants connus et actuellement utilisés ont l'inconvénient de rendre les dispersions très visqueuses dès que des teneurs élevées en matières solides sont souhaitées, leurs pouvoirs stabilisants étant trop faibles pour obtenir des dispersions de basses viscosités.

En effet, lors de l'utilisation industrielle de produits chimiques à base d'eau tels que des émulsions aqueuses de polymères, par exemple dans l'utilisation de colles, peintures, vernis ou analogues, les temps de séchage intervenant lors de la mise en oeuvre de ces derniers jouent un rôle important. Afin de diminuer ces temps de séchage, on cherche à augmenter les taux en matières solides de ces produits. Ceci a comme conséquence d'augmenter parallèlement la viscosité qui rend les produits en question difficiles d'utilisation voire inutilisables au-dessus d'un certain seuil de viscosité. A titre d'exemple, certains types de dispersions existantes à base d'acrylates utilisées pour la formulation ou en tant que colles possèdent des viscosités généralement comprises entre 5 et 10 Pa.s pour des taux en matières solides de l'ordre de 70%.

Comme exemples de substances stabilisantes, on connaît la famille des alcools polyvinyliques ou les émulsifiants à base de polymères synthétiques (copolymères de polyéthylène et de polypropylène, copolymères à base de styrène et d'anhydride maléïque...) ou naturels (cellulose, polyglucosides d'alkyle...), les dérivés d'alcools « gras », c'est-à-dire les dérivés sulfatés, phosphatés, sulfonatés, etc. d'alcools aliphatiques à longues chaînes en C₈ à C₁₈. Ces agents stabilisants sont notamment utilisés en tant que stabilisants de produits liants.

La réduction de la quantité de stabilisant utilisée dans les dispersions actuellement commercialisées en vue de diminuer leur viscosité n'est souvent pas possible car cela se traduit généralement par une baisse néfaste de la stabilité desdites dispersions, ce qui n'est pas admissible.

De plus, certains des stabilisants connus sont constitués ou incluent souvent des substances chimiques irritantes et/ou toxiques donc dangereuses pour la santé des personnes qui les manipulent ou pour l'environnement.

Le problème posé à la présente invention consiste à pallier certains sinon l'ensemble des inconvénients précités et de proposer une alternative aux stabilisants connus pour la polymérisation en émulsion permettant d'obtenir des dispersions présentant à la fois un taux en matières solides élevé et une viscosité raisonnable.

A cet effet, la présente invention a pour principal objet un procédé de polymérisation en émulsion particulier comprenant l'utilisation d'au moins un sulfonate de lignine en tant que stabilisateur de l'émulsion réactionnelle.

L'utilisation d'un tel stabilisateur, seul ou en combinaison avec des émulsifiants classiques permet d'obtenir des produits de polymérisation riches en matières solides mais présentant une viscosité encore acceptable pour leurs éventuels traitements ultérieurs, leurs conditionnements et leurs utilisations.

La présente invention a encore pour objet une dispersion susceptible d'être obtenue par le procédé précité, caractérisée en ce qu'elle comprend au moins un sulfonate de lignine, la teneur en sulfonate(s) de lignine de la dispersion étant comprise, en poids, entre 0,2% et 5%, de préférence, entre 0,2% et 0,5% de la quantité de matières solides formant ladite dispersion.

Cette dispersion est encore caractérisée en ce qu'elle présente une viscosité comprise entre 0,1 Pa.s et 5 Pa.s pour un taux de matières solides sous la forme de polymères compris en poids entre 50 % et 75 %.

Enfin, elle a encore pour objet l'utilisation d'une dispersion selon l'invention comme adhésif ou pour la fabrication d'un adhésif. En effet, lors de la fabrication d'un adhésif ou d'une colle, une telle dispersion peut être avantageusement utilisée comme produit ou agent liant.

L'invention sera mieux comprise grâce à la description ci-après.

Les sulfonates de lignine sont les sels de l'acide ligninesulfonique (encore appelé acide lignolsulfonique), produit soluble de transformation de la lignine au moyen de l'acide sulfureux ou des sulfites. L'acide ligninesulfonique utilisé dans le cadre de la présente invention peut ainsi être obtenu lors de la fabrication de la cellulose à partir de bois, ce qui le rend, au moins potentiellement, relativement peu nocif pour l'environnement.

En effet, lors d'une étape de la fabrication de la cellulose, on mélange la lignine du bois avec de l'acide sulfureux. Lors de ce traitement, la lignine est alors sulfonée et transformée en acide ligninesulfonique, qui neutralisé avec une base adéquate, donne lieu à la formation du sel correspondant.

Selon la base utilisée, on obtient des sels hydrosolubles de sodium, d'ammonium, de calcium, de magnésium, etc. dudit acide ligninesulfonique.

Les sulfonates de lignine se présentent généralement sous la forme d'une poudre jaune clair à brun foncé pratiquement inodore, non hygroscopique et assez stable (décomposition vers 200°C). Leur poids moléculaire est généralement compris entre 1000 et 20 000 g/mol.

Les sulfonates de lignine sont connus en tant que tels et déjà utilisés à diverses fins industrielles, telle que pour la préparation de la vanilline, comme détergents industriels, comme agents de flottation pour minerais, comme dispersants pour colorants, insecticides, pesticides, etc.

De plus, ce sont des produits écologiques (biodégradables) et non toxiques pour l'homme et l'environnement.

Les inventeurs de la présente demande ont maintenant trouvé, de manière inattendue et surprenante, que les sulfonates de lignine peuvent être avantageusement utilisés dans la polymérisation en émulsion et plus précisément en tant qu'agents stabilisateurs.

De manière générale, la polymérisation par émulsion consiste à commencer par dissoudre un émulsifiant (ou tensioactif) dans l'eau à une concentration supérieure à la concentration micellaire critique. Le ou les monomères sont dispersés sous forme de gouttelettes (0,1 à 1 mm). Par diffusion dans l'eau, il se forme des micelles protégées par les molécules d'émulsifiant. La quasi-totalité de la polymérisation se fait dans les micelles qui grossissent aux dépens desdites gouttelettes, leur taille croissant de quelques nanomètres à environ 0,5 µm. Les avantages de la polymérisation en émulsion sont la rapidité de la polymérisation proprement dite, cette dernière conduisant à des polymères de degré de polymérisation élevé avec une distribution étroite des masses molaires. De plus, la polymérisation en émulsion permet un contrôle aisé du dégagement thermique.

A titre d'exemples non limitatifs de matériaux essentiels fabriqués industriellement par ce type de polymérisation, on peut citer le SBR (styrene-butadiene-rubber = caoutchouc-styrène-butadiène), l'ABS (acrylonitrile-butadiène-styrène), les polyacétates, les polychlorures de vinyle, divers copolymères, etc.

Grâce à la présente invention il devient possible d'obtenir des dispersions contenant pas ou très peu de particules coagulées, qui présentent des taux élevés en matières solides (dissoutes) et des viscosités comparativement beaucoup plus faibles que celles de dispersions équivalentes obtenues sans le stabilisant selon l'invention. Des exemples comparatifs seront décrits plus loin.

Bien que tous les sels de l'acide ligninesulfonique peuvent être utilisés dans le cadre de l'invention on préfère particulièrement en tant que sulfonate de lignine utilisé le sulfonate de lignine de calcium (CAS Nr. 8061-52-7) et le sulfonate de lignine de sodium (CAS Nr. 8061-51-6). Le procédé selon la présente invention est donc caractérisée en ce que le sulfonate de lignine utilisé est préférentiellement choisi dans le groupe formé par le sulfonate de lignine de calcium et le sulfonate de lignine de sodium.

Ces composés peuvent être respectivement obtenus dans le commerce sous les désignations « BORREMENT CA 120 » et « BORRESPERSE NA 200 » de la société BORREGAARD DEUTSCHLAND GmbH à Karlsruhe en Allemagne. Les deux produits sont majoritairement obtenus à partir de bois de sapin (épicéa).

Bien entendu, le sulfonate de lignine utilisé peut l'être seul ou en mélange avec un ou plusieurs autres sulfonates de lignine, le cas échéant avec d'autres stabilisants conventionnels.

Selon une autre caractéristique, le procédé selon l'invention est caractérisée en ce que la teneur en sulfonate(s) de lignine du mélange réactionnel est comprise, en poids, entre 0,2% et 5% de la quantité de matières solides formant ledit mélange réactionnel. Préférentiellement la teneur en sulfonate(s) de lignine du mélange réactionnel est comprise, en poids, entre 0,2% et 0,5% de la quantité de matières solides formant ledit mélange réactionnel.

Le procédé de polymérisation en émulsion particulier de l'invention est caractérisé en ce qu'on prépare séparément, une solution A de sulfonate(s) de lignine, une émulsion B contenant les monomères à polymériser, ladite émulsion B contenant également au moins un sulfonate de lignine et une solution C contenant un initiateur de polymérisation, et en ce qu'on mélange, dans des conditions appropriées, ladite émulsion B et la solution C dans la solution A afin d'aboutir à la polymérisation en émulsion desdits monomères.

Les conditions de la polymérisation sont celles habituellement mises en oeuvre et bien connues de l'homme du métier, à savoir une température dans le réacteur de l'ordre de 80°C, l'ajout de l'émulsion pendant 3 à 4 heures, etc.

De manière préférée, la solution C initiatrice de la polymérisation peut être divisée en plusieurs portions que l'on ajoute au fur et à mesure de la préparation du mélange réactionnel. Un exemple pratique de polymérisation sera décrit ultérieurement.

Pour plus de précisions sur la réaction de polymérisation en émulsion proprement dite on pourra notamment se reporter aux ouvrages suivants « Emulsion Polymerization : Theory and Practice », D.C. Blackley, Wiley 1975 et « Emulsion Polymerization », F.A. Bovey, Interscience Publishers, 1965.

La présente invention a encore pour objet une dispersion susceptible d'être obtenue par le procédé selon l'invention, caractérisée en ce qu'elle comprend au moins un sulfonate de lignine, la teneur en sulfonate(s) de lignine de la dispersion étant comprise, en poids, entre 0,2% et 5%, de préférence, entre 0,2% et 0,5% de la quantité de matières solides formant ladite dispersion.

Cette dispersion est également caractérisée ce qu'elle présente une viscosité comprise entre 0,1 Pa.s et 5 Pa.s pour un taux de matières solides sous la forme de polymères compris en poids entre 50 % et 75 %. Dans le cadre de la présente invention, le terme « polymère » désigne ici aussi bien les homopolymères que les copolymères ainsi que les mélanges de ces derniers.

De manière préférée, la dispersion est caractérisée en ce qu'elle est réalisée à base de polymères acryliques et/ou méthacryliques.

Enfin, l'invention a également pour objet l'utilisation d'une dispersion selon l'invention comme adhésif ou pour la fabrication d'un adhésif. En particulier, les dispersions selon l'invention peuvent être utilisées comme agents liants ou agents de liaison.

On décrit à présent deux exemples non limitatifs d'une polymérisation conforme à la présente invention ainsi que deux exemples comparatifs n'utilisant pas les stabilisants selon l'invention.

### Exemple 1

Dans un réacteur émaillé à double paroi muni d'un agitateur et d'une sonde de température on verse 178 g d'eau désionisée, 1,5 g de sulfonate de lignine de calcium, 4,6 g d'un alcool gras éthoxylé présentant 8 unités d'oxyde d'éthylène et 0,7 g de bicarbonate de sodium et on chauffe ce mélange à 80°C. Une première portion de solution initiatrice constituée de 2,8 g de persulfate de sodium et de 12,5 g d'eau désionisée est ajoutée au mélange réactionnel précédemment obtenu.

On ajoute ensuite, au goutte à goutte pendant 3 heures et demie, une émulsion constituée de 277,2 g d'eau désionisée, de 4,3 g de sulfonate de lignine de calcium, de 13,8 g d'un alcool gras éthoxylé présentant 8 unités d'oxyde d'éthylène et de 0,7 g de bicarbonate de sodium, de 115,3 g de méthacrylate de méthyle, de 445,5 g de 2-éthylhexylacrylate, de 363,3 g de butylacrylate, de 18,9 g d'acide méthacrylique et de 1,6 g de thioglycolate d'éthylhexyle. En même temps on ajoute une seconde portion de solution initiatrice constituée de 0,9 g de persulfate de sodium et de 24,7 g d'eau désionisée. A la fin de l'adjonction de l'émulsion, le récipient ayant contenu l'émulsion est rincé avec 10 g d'eau désionisée dans le mélange réactionnel et la température du réacteur est portée à 85°C. On y ajoute alors pendant 15 minutes une troisième portion de solution initiatrice constituée de 1,4 g de persulfate de sodium et de 22,3 g d'eau désionisée.

Après 1 heure et demie de temps de réaction, le contenu du réacteur est refroidi à la température ambiante et filtré sur un tamis de 100 µm.

On obtient alors une dispersion A peu visqueuse ne présentant pas de particules coagulées (coagulat) et d'une teneur en matières solides en poids de 64,5%.

### Exemple 2

On procède comme pour l'exemple 1 en remplaçant toutefois le sulfonate de lignine de calcium par du sulfonate de lignine de sodium. On obtient encore alors une dispersion B peu visqueuse qui ne présente pas de particules coagulées (coagulat) et dont la teneur en matières solides en poids est de 64,5%.

### Exemple comparatif 1

On répète l'exemple 1 en remplaçant le sulfonate de lignine de calcium par le polyglycoléthersulfosuccinate d'alcool gras disodique disponible sous la dénomination commerciale « DISPONIL SUS 87 SPECIAL » de la société COGNIS. On obtient alors une dispersion C très visqueuse ne présentant pas de particules coagulées (coagulat) et d'une teneur en matières solides en poids de 65,1%.

### Exemple comparatif 2

On répète l'exemple 1 en remplaçant le sulfonate de lignine de calcium par l'éthersulfate d'alcool gras sodique disponible sous la dénomination commerciale « GEZAVON LL 23 Na» de la société HYDRIOR AG. On obtient alors une dispersion D très visqueuse ne présentant pas de particules coagulées (coagulat) et d'une teneur en matières solides en poids de 64,9%.

Pour mettre en évidence les avantages de la présente invention on a mesuré les viscosités selon Brookfield des quatre dispersions précédemment obtenues. Ces dernières ont ensuite été appliquées comme revêtement à raison de 25 g/m² de dispersion sur un film ou une feuille de polyester (film ou feuille dit « Melinex ») et la résistance au pelage à 180° a été déterminée après 24 heures sur de l'acier (Mesures d'adhésion par pelage « Peel » selon la norme PSTC, Pressure Sensitive Tape Council).

Les résultats de ces mesures ont été consignés dans le tableau 1 suivant.

**Tableau 1**

| | Teneur en mat. solides en poids en % | Résistance au pelage à 180° en N/25 mm | Viscosité en Pa.s |
|---|---|---|---|
| Dispersion C classique | 65,1 | 12,2 | 7,8 |
| Dispersion D classique | 64,9 | 15,0 | 5,1 |
| Dispersion A (sulfonate de lignine de Ca) | 64,5 | 14,5 | 0,224 |
| Dispersion B (sulfonate de lignine de Na) | 64,5 | 15,4 | 0,220 |

On constate que les dispersions selon l'invention présentent des viscosités nettement inférieures à celles de l'état de la technique pour des teneurs en solides et des résistances au pelage comparables, ce qui les rend plus commodes et plus polyvalentes dans leurs utilisations.

## Revendications

1. Procédé de polymérisation en émulsion **caractérisé en ce que** l'on prépare séparément, une solution A de sulfonate(s) de lignine, une émulsion B contenant les monomères à polymériser, ladite émulsion B contenant également au moins un sulfonate de lignine et une solution C contenant un initiateur de polymérisation, et **en ce qu'**on mélange, dans des conditions appropriées, ladite émulsion B et la solution C dans la solution A afin d'aboutir à la polymérisation en émulsion desdits monomères, le ou les sulfonates de lignine étant utilisés comme stabilisateurs de l'émulsion réactionnelle.

2. Procédé selon la revendication 1, **caractérisé en ce que** le sulfonate de lignine utilisé est préférentiellement choisi dans le groupe formé par le sulfonate de lignine de calcium et le sulfonate de lignine de sodium.

3. Procédé selon la revendication 1 ou 2, **caractérisé en ce que** la teneur en sulfonate(s) de lignine du mélange réactionnel est comprise, en poids, entre 0,2 % et 5 % de la quantité de matières solides formant ledit mélange réactionnel.

4. Procédé selon la revendication 3, **caractérisée en ce que** la teneur en sulfonate(s) de lignine du mélange réactionnel est préférentiellement comprise, en poids, entre 0,2 % et 0,5 % de la quantité de matières solides formant ledit mélange réactionnel.

5. Dispersion susceptible d'être obtenue par le procédé selon l'une quelconque des revendications 1 à 4, **caractérisée en ce qu'**elle comprend au moins un sulfonate de lignine, la teneur en sulfonate(s) de lignine de la dispersion étant comprise, en poids, entre 0,2 % et 5 %, de préférence, entre 0,2 % et 0,5 % de la quantité de matières solides formant ladite dispersion et **en ce qu'**elle présente une viscosité comprise entre 0,1 Pa.s et 5 Pa.s pour un taux de matières solides sous la forme de polymères compris en poids entre 50 % et 75 %.

6. Dispersion selon la revendication 5, **caractérisée en ce qu'**elle est réalisée à base de polymères acryliques et/ou méthacryliques.

7. Utilisation d'une dispersion selon la revendication 5 ou 6 comme adhésif.

8. Utilisation d'une dispersion selon la revendication 5 ou 6 pour la fabrication d'un adhésif.

## Patentansprüche

1. Verfahren zur Emulsionspolymerisation, **dadurch gekennzeichnet, daß** man getrennt eine Lösung A von Ligninsulfonat(en), eine Emulsion B, enthaltend die zu polymerisierenden Monomeren, wobei die genannte Emulsion B ebenfalls mindestens ein Ligninsulfonat enthält, und eine Lösung C, enthaltend einen Polymerisations-Initiator, herstellt, und **dadurch**, daß man die genannte Emulsion B und die Lösung C unter geeigneten Bedingungen in der Lösung A vermischt, um zur Emulsionspolymerisation der genannten Monomeren zu gelangen, wobei das oder die Ligninsulfonat(e) als,Stabilisatoren der Reaktions-Emulsion verwendet werden.

2. Verfahren nach Anspruch 1, **dadurch gekennzeichnet, daß** das verwendete Ligninsulfonat vorzugsweise aus der Gruppe gewählt wird, gebildet durch Calcium-Ligninsulfonat und Natrium-Ligninsulfonat.

3. Verfahren nach Anspruch 1 oder 2, **dadurch gekennzeichnet, daß** der Gehalt der Reaktionsmischung an Ligninsulfonat(en) zwischen 0,2 Gew.-% und 5 Gew.-% der Menge von Feststoffen beträgt, welche die genannte Reaktionsmischung bilden.

4. Verfahren nach Anspruch 3, **dadurch gekennzeichnet, daß** der Gehalt der Reaktionsmischung an Ligninsulfonat(en) vorzugsweise zwischen 0,2 Gew.-% und 0,5 Gew.-% der Menge von Feststoffen beträgt, welche die genannte Reaktionsmischung bilden.

5. Dispersion, die geeignet ist, durch das Verfahren nach irgendeinem der Ansprüche 1 bis 4 erhalten zu werden, **dadurch gekennzeichnet, daß** sie mindestens ein Ligninsulfonat umfaßt, wobei der Gehalt der Dispersion an Ligninsulfonat(en) zwischen 0,2 Gew.-% und 5 Gew.-%, vorzugsweise zwischen 0,2 Gew.-% und 0,5 Gew.-% der Menge von Feststoffen beträgt, welche die genannte Dispersion bilden, und **dadurch**, daß sie eine Viskosität zwischen 0,1 Pa.s und 5 Pa.s aufweist bei einem Gehalt an Feststoffen in Form der Polymeren zwischen 50 Gew.-% und 75 Gew.-%.

6. Dispersion nach Anspruch 5, **dadurch gekennzeichnet, daß** sie auf der Basis von acrylischen und/oder methacrylischen Polymeren hergestellt wird.

7. Verwendung einer Dispersion nach Anspruch 5 oder 6 als Klebstoff.

8. Verwendung einer Dispersion nach Anspruch 5 oder 6 zur Herstellung eines Klebstoffes.

## Claims

1. Emulsion polymerisation process, **characterised in that** a lignin sulphonate solution A, an emulsion B containing the monomers to be polymerised, said emulsion B also containing at least one lignin sulphonate and a solution C containing a polymerisation initiator are prepared separately, and **in that**, under appropriate conditions, said emulsion B and the solution C are mixed into the solution A in order to cause the emulsion polymerisation of said monomers, the lignin sulphonate or sulphonates being used as stabilisers for the reaction emulsion.

2. Process according to claim 1, **characterised in that** the lignin sulphonate used is preferably selected from the group consisting of calcium lignin sulphonate and sodium lignin sulphonate.

3. Process according to claim 1 or 2, **characterised in that** the lignin sulphonate content of the reaction mixture is between 0.2% and 5% by weight of the amount of solid substances forming said reaction mixture.

4. Process according to claim 3, **characterised in that** the lignin sulphonate content of the reaction mixture is preferably between 0.2% and 0.5% by weight of the amount of solid substances forming said reaction mixture.

5. Dispersion that may be obtained by the method according to any one of claims 1 to 4, **characterised in that** it comprises at least one lignin sulphonate, the lignin sulphonate content of the dispersion being between 0.2% and 5% by weight, preferably between 0.2% and 0.5% by weight of the amount of solid substances forming said dispersion, and **in that** it has a viscosity of between 0.1 Pa.s and 5 Pa.s for a content of solid substances, in the form of polymers, of between 50% and 75% by weight.

6. Dispersion according to claim 5, **characterised in that** it is based on acrylic and/or methacrylic polymers.

7. Use of a dispersion according to claim 5 or 6 as an adhesive.

8. Use of a dispersion according to claim 5 or 6 for producing an adhesive.
